# EUROPÄISCHE PATENTSCHRIFT

(11) **EP 2 196 683 B1**
(45) Veröffentlichungstag und Bekanntmachung des Hinweises auf die Patenterteilung: **04.04.2012**
(21) Anmeldenummer: 08021416.6
(22) Anmeldetag: 10.12.2008
(51) Int. Cl.: F15B 13/08

(54) **Fluidtechnische Anordnung und Dichtelement**
Fluidic system and sealing element
Système fluidique et élément d'étanchéité

(43) Veröffentlichungstag der Anmeldung: 16.06.2010
(73) Patentinhaber: FESTO AG & Co. KG, 73734 Esslingen (DE)
(72) Erfinder: Räpke, Falk, 72076 Tübingen (DE)
(74) Vertreter: Abel, Martin

(56) Entgegenhaltungen:
- EP-A- 0 350 725
- DE-A1- 2 448 509
- DE-A1- 19 711 227
- DE-U1- 9 409 788
- GB-A- 2 077 875
- US-A- 3 520 541

## Beschreibung

Die Erfindung betrifft eine fluidtechnische Anordnung mit einem Anschlussmodul, das wenigstens einen Anschlusskanal umfasst, der an einer Koppelfläche in einer Anschlussöffnung ausmündet und der für eine Zufuhr oder Abfuhr von Fluid ausgebildet ist, und mit einer lösbar am Anschlussmodul in einer Koppelstellung angebrachten Arbeitseinheit, die mehrere in einer Reihe aneinander gereihte und mit Verbindungseinrichtungen lösbar miteinander verbundene Arbeitsmodule mit jeweils wenigstens einem Arbeitskanal umfasst, der an einer Koppelfläche in einer Arbeitsöffnung ausmündet und der von einem Fluid durchströmbar ist, wobei die Koppelflächen in der Koppelstellung derart angeordnet sind, dass sich die Anschlussöffnung und die Arbeitsöffnung für eine kommunzierende Verbindung des Anschlusskanals mit dem Arbeitskanal gegenüberliegen, und mit wenigstens einem zwischen dem Anschlussmodul und dem Arbeitsmodul angeordneten Dichtelement, das für eine abdichtende Verbindung des Arbeitskanals mit dem jeweils gegenüberliegenden Anschlusskanal ausgebildet ist und das wenigstens zwei zur abdichtenden Anlage am Arbeitsmodul und am Anschlussmodul ausgebildete Dichtbereiche aufweist. Die Erfindung betrifft ferner ein Dichtelement für eine derartige fluidtechnische Anordnung.

Aus der DE 197 11 227 C2 ist eine Ventilanordnung mit einer Mehrzahl von jeweils einen Ventilschieber enthaltenden Ventilmodulen bekannt, die baugruppenartig zu einer als ganzheitlicher Körper handhabbaren Ventileinheit zusammengefasst sind. Die Ventileinheit ist lösbar auf einer plattenartigen Montagebasis anbringbar, in der mit anzusteuernden Verbrauchern verbindbare Verbraucherkanäle ausgebildet sind. Die Verbraucherkanäle sind gruppenweise unterschiedlichen Ventilmodulen der Ventileinheit zugeordnet und kommunizieren bei montierter Ventileinheit mit Arbeitskanälen des jeweils zugeordneten Ventilmoduls. Die Ventilmodule und die Montagebasis weisen jeweils ebene, einander gegenüberliegend anordenbare Oberflächenbereiche auf, an denen die Verbraucherkanäle und die Arbeitskanäle ausmünden. Für eine abdichtende Verbindung der Verbraucherkanäle mit den Arbeitskanälen soll eine geeignete Dichtungsanordnung vorgesehen werden. Bei dieser geeigneten Dichtungsanordnung kann es sich beispielsweise um einen Rundschnurring (O-Ring) handeln. Für eine vorteilhafte Handhabung der Dichtungsanordnung können in den sich gegenüberliegenden Oberflächen der Ventilmodule und der Montagebasis entsprechende Ausnehmungen vorgesehen sein, die zur teilweisen Aufnahme der Dichtungsanordnung während der Montage der Ventilmodule auf die Montagebasis und/oder zur Bereitstellung eines ausreichenden Deformationsraumes für die Dichtungsanordnung ausgewählt sind.

Nachteilig bei der bekannten Ventilanordnung ist es, dass aufgrund der modularen Aufbauweise der Ventilanordnung aus mehreren, miteinander zu verbindenden Ventilmodulen nicht gewährleistet werden kann, dass die Stirnflächen sämtlicher Ventilmodule in einer gemeinsamen Ebene liegen. Gleiches gilt auch für die möglicherweise aus mehreren Modulen zusammengesetzte Montagebasis. Durch die toleranzbehaftete Anordnung der Ventilmodule bzw. der Module der Montagebasis zueinander müssen die für die abdichtende Verbindung zwischen den Verbraucherkanälen und den Arbeitskanälen vorgesehenen Dichtungsanordnungen entsprechend groß dimensioniert werden, um den notwendigen Toleranzausgleich und damit stets eine Dichtwirkung gewährleisten zu können. Eine weitere Verkleinerung der Ventilmodule wird somit von der erforderlichen Mindestgröße der Dichtungsanordnung verhindert. Zudem sind zur Gewährleistung einer ausreichenden Dichtwirkung zwischen den Ventilmodulen und der Montagebasis erhebliche Kräfte aufzubringen, die eine entsprechend stabile Auslegung der Ventilmodule und der Montagebasis erfordern.

Die der Erfindung zugrundeliegende Aufgabe besteht darin, eine fluidtechnische Anordnung bereitzustellen, bei der eine Anordnung von Anschlusskanälen und Arbeitskanälen mit kleiner Teilung erreicht werden kann, um eine kompakte Gestaltung des Anschlussmoduls und der Arbeitseinheit zu ermöglichen.

Diese Aufgabe wird für eine fluidtechnische Anordnung der eingangs genannten Art dadurch gelöst, dass das Dichtelement einen längs einer Mittelachse hülsenförmig erstreckten Grundkörper umfasst, an dessen Stirnseite ein axial erstreckter, umlaufender Stirndichtabschnitt und an dessen Außenumfang ein radial erstreckter, axial beabstandet vom Stirndichtabschnitt angeordneter, umlaufender Umfangsdichtabschnitt ausgebildet ist und dass das Dichtelement in der Koppelstellung mit dem Stirndichtabschnitt am Anschlussmodul oder am Arbeitsmodul und mit dem Umfangsdichtabschnitt an einem Wandbereich des am jeweils anderen Modul ausgebildeten Arbeitskanals oder Anschlusskanals anliegt, wobei das Dichtelement längs der Mittelachse schiebebeweglich und mit dem Umfangsdichtabschnitt abdichtend im Anschlusskanal oder im Arbeitskanal aufgenommen ist.

Beispielsweise ist der Umfangsdichtabschnitt in Hinblick auf seine Geometrie und Flexibilität so ausgestaltet, dass das Dichtelement im Anschlusskanal oder im Arbeitskanal verschoben werden kann, wobei stets die Abdichtwirkung zwischen Dichtelement und dem jeweiligen Kanal gewährleistet ist.

Der hülsenförmig erstreckte Grundkörper erlaubt einen Ausgleich großer Toleranzen in axialer Richtung, wobei die Mittelachse des Grundkörpers zumindest im Wesentlichen orthogonal zu einer Koppelfläche des Anschlussmoduls oder der Arbeitseinheit ausgerichtet ist. Dies ermöglicht eine Kompression des Dichtelements in Richtung der Mittelachse über einen weitreichenden Kompressionsbereich, da durch die axiale Erstreckung des Grundkörpers bei geeigneter Materialauswahl für den Grundkörper ein ausreichender elastischer Deformationsweg bereitgestellt werden kann, ohne das Dichtelement zu überlasten. Der Stirndichtabschnitt dient zur abdichtenden Anlage des Dichtelements an einer gegenüberliegend angeordneten Oberfläche, vorzugsweise der Koppelfläche des gegenüberliegend angeordneten Anschlussmoduls bzw. Arbeitsmoduls. Vorzugsweise ist der Stirndichtabschnitt derart geometrisch vom Grundkörper abgesetzt, dass er eine erheblich größere Flexibilität als der Grundkörper ausweist. Dadurch wird die abdichtende Anlage des Dichtelements an der gegenüberliegenden Oberfläche des Anschlussmoduls oder des Arbeitsmoduls gewährleistet, auch wenn diese Oberfläche nicht vollständig eben ist und/oder mit der Mittelachse des Grundkörpers einen Winkel einschließt.

Der in axialer Richtung beabstandet vom Stirndichtabschnitt angeordnete Umfangsdichtabschnitt ist für eine abdichtende Aufnahme des Dichtelements in dem Arbeitskanal bzw. dem Anschlusskanal ausgebildet, die üblicherweise als Bohrungen ausgebildet sind.

Dies ist besonders vorteilhaft, wenn die Arbeitseinheit mehrere in einer Reihe aneinander gereihte und mit Verbindungseinrichtungen lösbar miteinander verbundene Arbeitsmodule umfasst. Die Arbeitsmodule können jeweils als vollkommen eigenständige Module ausgebildet sein, die über diskrete fluidische und/oder elektrische Steuerleitungen angesteuert werden und die fluidisch nur mit dem Anschlussmodul und nachgelagerten Verbrauchern verbunden sind. Alternativ können die Arbeitsmodule durch Fluidkanäle und/oder mit elektrischen Signalleitungen, insbesondere einem Bussystem, miteinander gekoppelt sein, um beispielsweise eine zentrale und gemeinsame Ansteuerung durch eine Steuereinheit zu ermöglichen oder eine zentrale Abfuhr von überschüssigem Fluid, insbesondere an einen Schalldämpfer oder in einen Vorratsbehälter, zu ermöglichen.

Vorteilhaft ist es, wenn der Stirndichtabschnitt und der Umfangsdichtabschnitt an entgegengesetzten Endbereichen des Dichtelements ausgebildet sind. Dadurch wird die axiale Kompressibilität des Dichtelements zu Gewährleistung der Abdichtwirkung umfassend ausgenutzt. Damit kann das Dichtelement auch einen großen axialen Abstand zwischen Anschlussmodul und Arbeitsmodul ausgleichen.

In einer Ausgestaltung der Erfindung ist vorgesehen, dass der Stirndichtabschnitt als schräg zur Mittelachse ausgerichtete Stirndichtlippe ausgebildet ist. Vorzugsweise ist die Stirndichtlippe mit einer gegenüber dem Grundkörper reduzierten Wandstärke und in der Art eines Kegelmantelabschnitts ausgebildet. Dadurch wird bei einer axialen Kompression des Dichtelements eine definierte Anlage des Stirndichtabschnitts an der gegenüberliegenden Oberfläche und somit eine vorteilhafte Dichtwirkung gewährleistet.

Bei einer vorteilhaften Ausführungsform der Erfindung ist der Stirndichtabschnitt in einer vom Grundkörper wegweisenden Axialrichtung verjüngt ausgebildet. Das heißt, dass die Stirndichtlippe in einer Axialrichtung, die dem mit dem Umfangsdichtabschnitt ausgestatteten Grundkörper entgegengesetzt ist, in radialer Richtung verjüngt ausgeführt ist. Dadurch kann, insbesondere bei einer sehr dünnwandig ausgeführten Stirndichtlippe, gewährleistet werden, dass diese bei starker Kompression des Dichtelements nicht überdehnt und gegebenenfalls beschädigt wird. Zudem stellt die axiale Verjüngung der Stirndichtlippe sicher, dass bei einem Überdruck im Arbeitskanal gegenüber einer Umgebung eine Verstärkung der Dichtwirkung eintritt, da sich eine derart geformte Dichtlippe nach außen ausdehnt und dabei mit erhöhter Anpresskraft gegen die gegenüberliegende Oberfläche gepresst wird.

Vorteilhaft ist es, wenn der Umfangsdichtabschnitt als schräg zur Mittelachse ausgerichtete Umfangsdichtlippe ausgebildet ist. Durch diese Gestaltung wird eine vorteilhafte Flexibilität der Umfangsdichtlippe in radialer Richtung und in axialer Richtung sichergestellt. Somit erfolgt bei Auftreten einer axialen Kompression des Dichtelements eine vorteilhafte Ausweichbewegung der Umfangsdichtlippe, ohne dass diese mechanisch überlastet wird und Beschädigungen auftreten.

In weiterer Ausgestaltung der Erfindung ist vorgesehen, dass sich die Umfangsdichtlippe in einer vom Grundkörper wegweisenden Axialrichtung radial aufweitet, das heißt, dass die Umfangsdichtlippe in der Art eines Kegelmantelabschnitts ausgebildet ist, der sich mit zunehmendem Abstand von Stirndichtabschnitt aufweitet. Vorzugsweise schließen sowohl die Umfangsdichtlippe als auch die Stirndichtlippe in einer gemeinsamen Schnittebene, die die Mittelachse umfasst, jeweils einen spitzen Winkel ein. Durch die radial aufgeweitete Gestaltung der Umfangsdichtlippe wird auch bei steigendem Überduck im Arbeitskanal eine sichere Anlage des Dichtelements an dem radial außenliegenden Wandbereich des Arbeitskanals bzw. des Anschlusskanals gewährleistet.

In weiterer Ausgestaltung der Erfindung ist vorgesehen, dass der Anschlusskanal und der Arbeitskanal im Bereich der jeweiligen Ausmündung an der Koppelfläche unterschiedlich große freie Querschnitte aufweisen und der größere freie Querschnitt zur Aufnahme des mit dem Umfangsdichtabschnitt versehenen Endbereichs des Dichtelements bestimmt ist. Durch den Querschnittsunterschied der Endbereiche des Anschlusskanals und des Arbeitskanals wird sichergestellt, dass das Dichtelement in jeweils einem der Kanäle zumindest teilweise aufgenommen werden kann, ohne den jeweils längs des Anschlusskanals und des Arbeitskanals vorliegenden geringsten freien Querschnitt weiter zu verengen.

Bei einer weiteren Ausführungsform der Erfindung ist vorgesehen, dass der Grundkörper hohlzylindrisch und die Stirndichtlippe und die Umfangsdichtlippe jeweils ringförmig ausgebildet sind. Mit einer derartigen Gestaltung des Grundkörpers und der Dichtlippen, die insbesondere rotationssymmetrisch zur Mittelachse ausgeführt sein können, lässt dich eine homogene Verteilung innerer Spannungen im Grundkörper und in den Dichtlippen erreichen. Dadurch kann auch bei höheren Druckbelastungen auf das Dichtelement eine zuverlässige Abdichtwirkung gewährleistet werden.

In weiterer Ausgestaltung der Erfindung ist vorgesehen, dass ein größter Durchmesser einer Berührlinie der Umfangsdichtlippe mit dem Anschlusskanal oder dem Arbeitskanal größer als ein größter Durchmesser einer Berührlinie der Stirndichtlippe bei Anlage an dem Arbeitsmodul oder an dem Anschlussmodul ist. Dadurch wird bei Vorliegen eines Überdrucks im Anschlusskanal und im Arbeitskanal gegenüber einer Umgebungsatmosphäre eine in Richtung des Stirndichtabschnitts gerichtete resultierende Axialkraft auf das Dichtelement hervorgerufen. Diese Axialkraft stellt in Kombination mit der Schiebebeweglichkeit des Dichtelements längs der Mittelachse eine zuverlässige Anlage der Stirndichtlippe an der gegenüberliegenden Oberfläche sicher.

Vorteilhaft ist es, dass das Dichtelement in axialer Richtung aufeinanderfolgende Bereiche mit unterschiedlichen Wandstärken aufweist, wobei ein Bereich mit einer geringeren Wandstärke benachbart zum Umfangsdichtabschnitt und ein Bereich mit einer größeren Wandstärke benachbart zum Stirndichtabschnitt angeordnet sind. Der Bereich mit der geringeren Wandstärke stellt eine axiale und radiale Deformierbarkeit des Dichtelements sicher. Der Bereich mit der größeren Wandstärke, der dem Stirndichtabschnitt benachbart ist, gewährleistet einen hohen Widerstand des Dichtelements gegen Spaltextrusion. Das heißt, dass das Dichtelement trotz der radial nach außen wirkenden Druckkräfte einen üblicherweise stets vorhandenen Spalt zwischen Anschlussmodul und Arbeitsmodul überbrückt, ohne dass eine unerwünschten Aufweitung des Dichtelement in diesen Spalt stattfindet.

In weiterer Ausgestaltung der Erfindung ist vorgesehen, dass das Dichtelement an einem Außenumfang wenigstens eine benachbart zum Umfangsdichtbereich angeordnete Umfangseinschnürung aufweist. Somit ist der Außendurchmesser des Grundkörpers benachbart zum Umfangsdichtbereich kleiner als der Außendurchmesser des Grundkörpers benachbart zur Stirnlippendichtung.

Durch diese Außendurchmesserreduktion wird eine eindeutig bestimmte Anlage der Umfangsdichtlippe am Wandbereich des Arbeitskanals bzw. des Anschlusskanals sichergestellt. Zudem wird eine Reduzierung der Reiboberfläche zwischen Dichtelement und Wandbereich erreicht, so dass das Dichtelement mit geringer Kraft in axialer Richtung verschoben werden kann. Vorzugsweise sind an dem Dichtelement zwei durch einen umlaufenden Bund voneinander getrennte Umfangseinschnürungsbereiche vorgesehen, von denen wenigstens einer für einen Eingriff einer senkrecht zur Mittelachse ausgerichteten Halteklammer eingerichtet ist, die als Verliersicherung für das Dichtelement dient.

Vorteilhaft ist es, wenn die Stirndichtlippe in axialer Richtung eine größere Flexibilität aufweist als die Umfangsdichtlippe. Die bei Druckbeaufschlagung des Arbeitskanals und des Anschlusskanals auf das Dichtelement einwirkende, axial in Richtung der Stirndichtlippe resultierende Kraft führt somit zunächst zu einer abdichtenden Anlage der Stirndichtlippe, bevor durch die Kraft eine Deformation der Umfangsdichtlippe auftritt. Durch die größere Steifigkeit der Umfangsdichtlippe wird somit eine vorteilhafte Einleitung der durch die Druckdifferenz zwischen Arbeitskanal und Anschlusskanal und der Umgebung hervorgerufenen Druckkraft auf das Dichtelement sichergestellt.

Vorteilhaft ist es, wenn der Grundkörper an dem mit der Stirndichtlippe versehenen Endabschnitt einen maximalen Auβendurchmesser aufweist, der zumindest nahezu dem Durchmesser des Arbeitskanals oder des Anschlusskanals entspricht, in dem das Dichtelement aufgenommen ist. Dadurch wird eine vorteilhafte axiale Führung des Dichtelements in dem jeweiligen Kanal gewährleistet, so dass es bei einer linearen Verschiebung des Dichtelements in axialer Richtung nicht zu einer unerwünschten Verkippung oder Verklemmung des Dichtelements kommt.

Bei einer Ausgestaltung der Erfindung ist vorgesehen, dass in dem Arbeitskanal oder in dem Anschlusskanal ein an die Koppelfläche angrenzender Aufnahmeabschnitt zur Aufnahme des Dichtelements ausgebildet ist, der einen größeren Innendurchmesser als ein daran angrenzender Abschnitt des Arbeitskanals oder des Anschlusskanals aufweist. Vorzugsweise sind der Aufnahmeabschnitt und der hülsenförmige Grundkörper des Dichtelements derart aufeinander abgestimmt, dass ein freier Innendurchmesser des Dichtelements zumindest im Wesentlichen dem Querschnitt des sich an den Aufnahmeabschnitt anschließenden Arbeitskanals oder Anschlusskanals entspricht. Dadurch wird eine unerwünschte Einengung des freien Querschnitts des Arbeitskanals oder des Anschlusskanals durch das Dichtelement vermieden.

In weiterer Ausgestaltung der Erfindung ist vorgesehen, dass ein mittlerer Außendurchmesser des Dichtelements zumindest im Wesentlichen einer Länge des Dichtelements entspricht. Somit weist das Dichtelement in einer die Mittelachse enthaltenden Schnittebene eine im Wesentlichen quadratische Profilierung auf. Dadurch wird bei translatorischen Bewegungen des Dichtelements gewährleistet, dass es nicht zu einer Verkippung oder Verklemmung des Dichtelements in der jeweiligen Ausnehmung kommt.

Vorteilhaft ist es, wenn der Grundkörper des Dichtelements einstückig aus einem gummielastischen Material, insbesondere im Kunststoffspritzgussverfahren, hergestellt ist. Dies ermöglicht eine kostengünstige Herstellung des Dichtelements.

In weiterer Ausgestaltung der Erfindung ist vorgesehen, dass den Grundkörper wenigstens ein, vorzugsweise benachbart zum Stirndichtabschnitt angeordnetes, zirkular umlaufendes Verstärkungselement zugeordnet ist. Bei dem Verstärkungselement kann es sich um eine lediglich bereichsweise oder vollständige umlaufende Verstärkungsstruktur, insbesondere um einen Verstärkungsring aus Metall oder eine ringartig geformte Gewebestruktur handeln, die insbesondere zur Vermeidung der Spaltextrusion für das Dichtelement vorgesehen ist. Durch das Verstärkungselement kann insbesondere die Wandstärke des Grundkörpers benachbart zur Stirndichtlippe gering gehalten werden, da eine Spaltextrusion auch bei reduzierter Wandstärke des Grundkörpers aufgrund des Verstärkungselements ausgeschlossen werden kann.

In weiterer Ausgestaltung der Erfindung sind die Stirndichtlippe und/oder die Umfangsdichtlippe aus einem Material hergestellt, das eine größere Flexibilität als das Material des Grundkörpers aufweist. Dadurch kann durch die vom Grundkörper abweichende Materialauswahl für die Dichtlippen sichergestellt werden, dass diese eine besondere hohe Flexibilität aufweisen. Vorzugsweise wird das Dichtelement im Mehrkomponentenspritzguss hergestellt.

Für ein Dichtelement wird die Aufgabe der Erfindung dadurch gelöst, dass das Dichtelement einen längs einer Mittelachse hülsenförmig erstreckten Grundkörper umfasst, an dessen Stirnseite ein axial erstreckter, umlaufender Stirndichtabschnitt und an dessen Außenumfang ein radial erstreckter, axial beabstandet vom Stirndichtabschnitt angeordneter, umlaufender Umfangsdichtabschnitt ausgebildet ist, wobei der Stirndichtabschnitt und der Umfangsdichtabschnitt an entgegengesetzten Endbereichen des Grundkörpers angeordnet sind und der Stirndichtabschnitt als schräg zur Mittelachse ausgerichtete Stirndichtlippe und der Umfangsdichtabschnitt als schräg zur Mittelachse ausgerichtete Umfangsdichtlippe ausgebildet sind.

Ein Ausführungsbeispiel der Erfindung ist anhand der Zeichnung dargestellt. Dabei zeigt:
- Figur 1: eine fluidtechnische Anordnung mit einem An- schlussmodul und einer aus mehreren Arbeitsmodulen aufgebauten Arbeitseinheit in einer demontierten Stellung,
- Figur 2: das Anschlussmodul und die Arbeitseinheit in einer Koppelstellung,
- Figur 3: eine Seitenansicht eines Dichtelements, und
- Figur 4: eine Längsschnittdarstellung des Dichtelements ge- mäß Figur 3 entlang der Schnittlinie A-A.

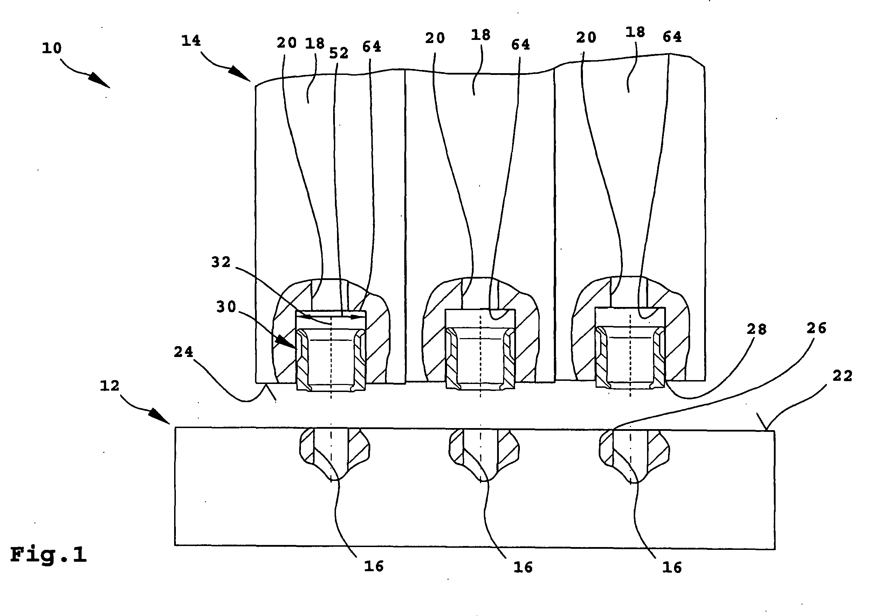

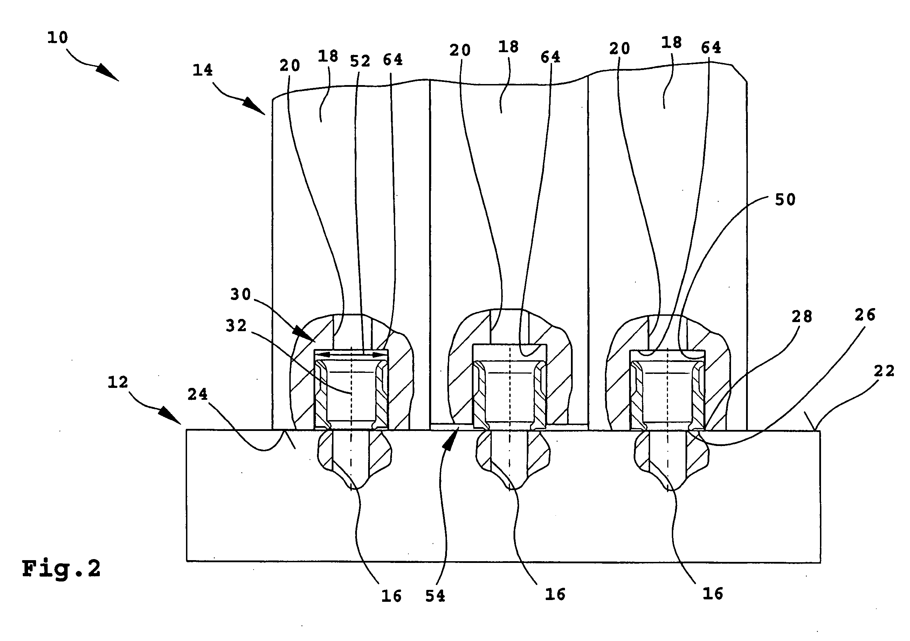

Eine in den Figuren 1 und 2 dargestellte fluidtechnische Anordnung 10 umfasst ein Anschlussmodul 12 sowie eine Arbeitseinheit 14. Das Anschlussmodul 12 kann beispielsweise als Verteilerleiste ausgebildet sein, in der eine Vielzahl von Anschlusskanälen 16 angeordnet sind, die für die Zu- bzw. Abfuhr von Fluid, beispielsweise Druckluft oder Hydraulikflüssigkeit, vorgesehen sind. Die Arbeitseinheit 14 umfasst mehrere Arbeitsmodule 18, die beispielsweise als platten- oder scheibenförmige Ventileinrichtungen, als Druckregler, Öler, Trockner oder Verteilerverzweigungen, ausgebildet sein können. Die Arbeitsmodule 18 sind in nicht näher dargestellter Weise für eine gegenseitige Kopplung zu einer Arbeitseinheit 14 ausgebildet. Die Arbeitseinheit 14 kann ihrerseits an das Anschlussmodul 12 angekoppelt bzw. von diesem abgekoppelt werden. Dabei ist die Teilung der im Anschlussmodul 12 vorgesehen Anschlusskanäle 16 und der Arbeitskanäle 20 in den Arbeitsmodulen 18 so ausgewählt, dass den Arbeitskanälen 20 jeweils ein Anschlusskanal 16 zumindest nahezu konzentrisch gegenüberliegt. Bei der Ankopplung der Arbeitseinheit 14 an das Anschlussmodul 12 ist eine Koppelfläche 22 des Anschlussmoduls 12 einer Koppelfläche 24, die von Stirnseiten der Arbeitsmodule 18 gebildet wird, gegenüberliegend angeordnet. Die Anschlusskanäle 16 und die Arbeitskanäle 20 münden jeweils in Anschlussöffnungen 26 bzw. Arbeitsöffnungen 28 an den Koppelflächen 22 bzw. 24 aus.

Weder die Koppelfläche 22, die als Oberfläche des beispielsweise als Aluminium-Strangpressprofil hergestellten Anschlussmoduls 12 ausgebildet sein kann, noch die Koppelfläche 24, die durch die Stirnseiten der zur Arbeitseinheit 14 miteinander gekoppelten Arbeitsmodule 18 gebildet wird, sind ausreichend plan ausgeführt, um ohne eine Dichteinrichtung eine abdichtende Verbindung zwischen Anschlussmodul 12 und Arbeitseinheit 14 zu gewährleisten. Zudem können sich bedingt durch Toleranzen der nicht dargestellten Verbindungsmittel zwischen den Arbeitsmodulen 18 verschiedene Anordnungen der Arbeitsmodule 18 ergeben, wie nachstehend näher beschrieben wird. Daher werden für eine abdichtende Verbindung der Anschlusskanäle 16 mit den jeweils zugeordneten Arbeitskanälen 20 Dichtelemente 30 eingesetzt, die bei der dargestellten Ausführungsform der Erfindung jeweils in Endbereichen der Arbeitskanäle 20 aufgenommen sind.

Die Dichtelemente 30 sind, wie nachstehend noch näher beschrieben wird, derart ausgebildet, dass sie sowohl eine Verkippung der Arbeitseinheit 14 gegenüber dem Anschlussmodul 12, insbesondere bei treppenartigem Versatz der Arbeitsmodule 18 wie exemplarisch in der Figur 1 dargestellt, als auch einen axialen Versatz der Arbeitsmodule 18 in einer Richtung orthogonal zur Koppelfläche 22, wie exemplarisch in Figur 2 dargestellt, ausgleichen können.

Der Versatz der Arbeitsmodule 18 liegt unter Anderem in der Art der Kopplung der Arbeitsmodule 18 begründet. Die beispielsweise als quaderförmige Ventilplatten ausgebildeten Arbeitsmodule 18 sind jeweils mit benachbarten Arbeitsmodulen 18 gekoppelt. Da sowohl die nicht näher dargestellten Kopplungseinrichtungen zwischen den Arbeitsmodulen 18 als auch die Außenabmessungen der Arbeitsmodule 18 toleranzbehaftet sind, kann es zu dem vorstehend beschriebenen Versatz zwischen einzelnen Arbeitsmodulen 18 kommen. Der Versatz zwischen den einzelnen Arbeitsmodulen 18 kann sich über die gesamte Arbeitseinheit aufgrund von Toleranzaddition zu erheblichen Spaltweiten aufsummieren. Daher sind entsprechend eingerichtete Dichtelemente vorzusehen, die zum Ausgleich der auftretenden Toleranzen dienen.

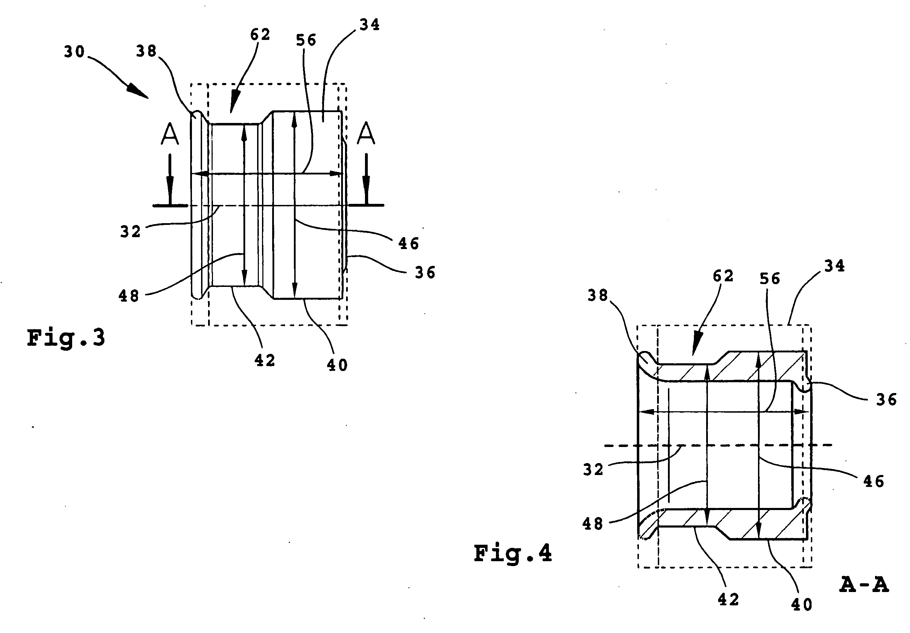

Das in den Figuren 3 und 4 näher dargestellte Dichtelement 30 ist exemplarisch als Rotationskörper ausgebildet, der sich hülsenförmig längs einer Mittelachse 32 erstreckt. Das Dichtelement 30 umfasst einen im Wesentlichen zylinderhülsenabschnittsförmig ausgebildeten Grundkörper 34, an dem an einem ersten Stirnbereich ein umlaufender Stirndichtabschnitt 36 und an einem zweiten Stirnbereich ein umlaufender Umfangsdichtabschnitt 38 ausgebildet sind.

Der Grundkörper 34 umfasst einen dickwandigen Zylinderhülsenabschnitt 40, an den sich in axialer Richtung ein dünnwandiger Zylinderhülsenabschnitt 42 anschließt. Die dem dünnwandigen-Zylinderhülsenabschnitt 42 entgegengesetzte Stirnseite des dickwandigen Zylinderhülsenabschnitts 40 ist mit dem als Stirndichtlippe ausgeführten, umlaufenden Stirndichtabschnitt 36 versehen. An den dünnwandigen Zylinderhülsenabschnitt 42 schließt sich in einem den dickwandigen Zylinderhülsenabschnitt 40 entgegengesetzten Bereich in axialer Richtung der als Umfangsdichtlippe ausgebildete Umfangsdichtabschnitt 38 an. Die Zylinderhülsenabschnitte 40, 42 weisen bei der dargestellten Ausführungsform gemäß Figur 4 jeweils den gleichen Innendurchmesser 44 auf, unterscheiden sich jedoch hinsichtlich ihrer Außendurchmesser 46, 48. Der Innendurchmesser 44 entspricht im Wesentlichen dem Innendurchmesser des Anschlusskanals 16 bzw. des Arbeitskanals 20, wobei im vorliegenden Ausführungsbeispiel der Anschlusskanal 16 einen zur Aufnahme des Dichtelements 30 erweiterten Aufnahmebereich 50 aufweist.

Der Außendurchmesser 48 des dünnwandigen Zylinderhülsenabschnitts 42 ist kleiner als ein Innendurchmesser 52 des Aufnahmebereichs 50 gewählt, um einerseits eine hohe Flexibilität für den Umfangsdichtabschnitt 38 zu gewährleisten und andererseits eine möglichst geringe Anlagefläche des Dichtelements 30 im Aufnahmebereich 50 zu gewährleisten. Der Außendurchmesser 46 des dickwandigen Zylinderhülsenabschnitts 40 ist zumindest nahezu gleich dem Innendurchmesser 52 des Aufnahmebereichs 50 gewählt, um eine Längsführung des Dichtelements 30 in dem Aufnahmebereich 60 sicherzustellen, die bei der translatorischen Verschiebung längs der Mittelachse 32 von Bedeutung ist. Dadurch soll insbesondere eine unerwünschte Verkippung des Dichtelements 30 um eine Achse senkrecht zur Mittelachse 32 vermieden werden. Zudem ist der dickwandige Zylinderhülsenabschnitt 40 derjenige Bereich des Dichtelements 30, der in den gegebenenfalls durch vorliegende Toleranzen zwischen dem Arbeitsmodul 18 und dem Anschlussmodul 12 ausgebildeten Spalt 54, wie er in der Figur 2 exemplarisch dargestellt ist, hineinragt. Das Dichtelement 30 dient zur Überbrückung des Spalts 54, in dem der Umgebungsdruck vorliegt, während das Dichtelement an seinen Innenflächen mit dem im Anschlusskanal 16 und im Arbeitskanal 20 vorliegenden internen Druck, insbesondere einem Überdruck, beaufschlagt ist. Daher dient der dickwandige Zylinderhülsenabschnitt 40 dazu, eine unerwünschte Deformation, insbesondere eine sogenannte Spaltextrusion des Dichtelements 30 in den Spalt 54 zu verhindern, wie dies bei einem in diesem Bereich dünnwandig ausgebildeten Dichtelement der Fall sein könnte.

Der am dickwandigen Zylinderhülsenabschnitt 40 vorgesehene Stirndichtabschnitt 36; der in der Art einer umlaufenden, flexiblen Stirndichtlippe ausgebildet ist, dient zur stirnseitigen abdichtenden Anlage des Dichtelements 30 an einer vorzugsweise plan ausgeführten Oberfläche, insbesondere an der Koppelfläche 22 des Anschlussmoduls 12. Der Stirndichtabschnitt 36 ist in der Art eines konushülsenabschnittsförmigen Rings ausgebildet, der sich in einer dem Umfangsdichtabschnitt 38 entgegengesetzten Richtung verjüngt. Durch diese Verjüngung ist gewährleistet, dass das Dichtelement 30 bei Überdruck im Anschlusskanal 16 und im Arbeitskanal 20 in selbstverstärkender Weise an der jeweils gegenüberliegenden Koppelfläche anliegt. Bedingt durch die Krafteinwirkung des Fluids auf den Stirndichtabschnitt 36 tritt eine Aufspreizungsbewegung auf, die der Verjüngungsrichtung des Stirndichtabschnitts 36 entgegengesetzt ist. Die Aufspreizungsbewegung führt zu einer höheren Anpresskraft des Stirndichtabschnitts 36 an der entsprechenden Koppelfläche 22, 24.

Der endseitig am dünnwandigen Zylinderhülsenabschnitt 42 angebrachte Umfangsdichtabschnitt 38 ist ähnlich wie der Stirndichtabschnitt 36 als konushülsenabschnittsförmige Umfangsdichtlippe ausgebildet, die sich in einer vom Stirndichtabschnitt 36 abweichenden Richtung längs der Mittelachse 32 aufweitet. Dadurch wird ebenfalls eine selbstverstärkende Anlagekraft für die Umfangsdichtabschnitt 38 bei einem Überdruck im Anschlusskanal 16 und Arbeitskanal 20 gegenüber einer Umgebung gewährleistet. Zudem begünstigt die konushülsenabschnittsförmige Gestaltung des Umfangsdichtabschnitts 38 eine translatorische Verlagerung des Dichtelements in Richtung des Stirndichtabschnitts 36, so dass eine nahezu vollständig frei einstellbare translatorische Positionierung des Dichtelements 30 längs der Mittelachse 32, insbesondere in Richtung der Koppelfläche 22 des Anschlussmoduls 12 gewährleistet ist.

Diese translatorische Verschiebbarkeit des Dichtelements 30 längs der Mittelachse 32 im Aufnahmebereich 50 ist deshalb von besonderer Bedeutung, da hierdurch sichergestellt wird, dass bei einem Vorliegen eines Spalts 54 zwischen dem Arbeitsmodul 18 und dem Anschlussmodul 12 eine selbsttätige Ausrichtung des Dichtelements 30 in Richtung des Stirndichtabschnitts 36 erfolgt. Ein Einschieben des Dichtelements 30 in den Aufnahmebereich 50 erfolgt bereits durch die zwischen Arbeitsmodul 18 und Anschlussmodul 12 aufzubringenden Verriegelungskräfte. Dabei ist eine Tiefe des Aufnahmebereichs 50 kleiner als eine Länge 56 des Dichtelements 30, so dass bei flächiger Anlage des jeweiligen Arbeitsmoduls 18 auf dem Anschlussmodul 12 der Umfangsdichtbereich 38 an einer umlaufenden Stufe 64 anliegt, die sich durch den Querschnittssprung im Arbeitskanal 20 ergibt. Damit ist bei flächiger Anlage der gegenüberliegenden Koppelflächen 22, 24 auch ohne Vorliegen eines Überdrucks im Anschlusskanal 16 und im Arbeitskanal 20 eine Dichtwirkung durch das Dichtelement 30 sichergestellt.

Für eine zuverlässige Abdichtwirkung des Dichtelements 30 zur Beherrschung unterschiedlicher Spaltweiten des Spaltes 54 ist es darüber hinaus notwendig, dass sich das Dichtelement 30 unter Überdruckeinfluss im Anschlusskanal 16 selbsttätig in Richtung des Stirndichtabschnitts 36 verschieben kann, um auch bei zurückversetzter Anordnung des jeweiligen Arbeitsmoduls 18 gegenüber dem Anschlussmodul 12 in abdichtende Anlage zur Koppelfläche 22 zu gelangen.

Bei der Translationsbewegung des Dichtelements 30 längs der Mittelachse 32 in den Aufnahmebereich 50 ist es vorteilhaft, dass das Dichtelement 30 eine durch den dünnwandigen Zylinderhülsenabschnitt 42 bestimmte Einschnürung 62 aufweist, da durch diese Einschnürung 62 die Reibfläche zwischen Dichtelement 30 und Aufnahmebereich 50 gering gehalten wird. Zudem bewirken der dünnwandige Zylinderhülsenabschnitt 42 und die dadurch bestimmte Einschnürung 62 des Dichtelements 30 eine Flexibilisierung des Umfangsdichtabschnitts 38, so dass dieser besonders gut in der Lage ist, sich an unterschiedliche Querschnitte des Aufnahmebereichs 50 anzupassen. Dieser kann beispielsweise Formabweichungen in der Art eines elliptischen Querschnitts an Stelle eines kreisrunden Querschnitts aufweisen, die fertigungstechnisch bedingt sein können.

Bei der vorliegenden Ausführungsform des Dichtelements 30 ist ein größter Durchmesser einer Berührlinie des Umfangsdichtabschnitts 38 mit dem Aufnahmebereich 50 größer als ein größter Durchmesser einer Berührlinie des Stirndichtabschnitts 36 bei Anlage an der Koppelfläche 22 gewählt. Dadurch kann sichergestellt werden, dass zumindest bei Vorliegen eines Überdrucks im Anschlusskanal 16 und im Arbeitskanal 20 gegenüber einer Umgebung eine resultierende Druckkraft auf das Dichtelement 30 längs der Mittelachse 32 in Richtung des Stirndichtabschnitts 36 wirkt. Dadurch wird die erwünschte translatorische Bewegung und die entsprechende Anpressung des Dichtelements 30 an die Koppelfläche 22 bewirkt.

Für die translatorische Verschiebung des Dichtelements 30 im Aufnahmebereich 50 ist es vorteilhaft, dass die Länge 56 des Dichtelements 30 zumindest im Wesentlichen dem maximalen Auβendurchmesser 46 des dickwandigen Zylinderhülsenabschnitts 40 entspricht. Dadurch wird sichergestellt, dass das Dichtelement 30 durch die auftretenden Druckkräfte bei Überdruck im Anschlusskanal 16 nicht im Aufnahmebereich 50 verkippt und dadurch die Dichtwirkung in Frage gestellt wird.

Besonders bevorzugt ist bei einer nicht dargestellten Ausführungsform des Dichtelements vorgesehen, dass die Länge größer als der maximale Außendurchmesser gewählt ist.

Bei einer ebenfalls nicht dargestellten Ausführungsform der Erfindung ist im dickwandigen Zylinderhülsenabschnitt ein vorzugsweise ringförmiges, längs der Mittelachse erstrecktes Verstärkungselement eingebracht, das vorzugsweise vollständig vom gummielastischen Material des Grundkörpers umgeben ist und insbesondere als Metallring ausgebildet ist. Das Verstärkungselement ermöglicht die Reduzierung der Wandstärke des dickwandigen Zylinderhülsenabschnitts, so dass das Dichtelement schlanker ausgeführt werden kann, ohne das die Gefahr einer Spaltextrusion des vorderen Bereichs des Dichtelements besteht.

## Patentansprüche

1. Fluidtechnische Anordnung mit einem Anschlussmodul (12), das wenigstens einen Anschlusskanal (16) umfasst, der an einer Koppelfläche (22) in einer Anschlussöffnung (26) ausmündet und der für eine Zufuhr oder Abfuhr von Fluid ausgebildet ist, und mit einer lösbar am Anschlussmodul (12) in einer Koppelstellung angebrachten Arbeitseinheit (14), die mehrere in einer Reihe aneinander gereihte und mit Verbindungseinrichtungen lösbar miteinander verbundene Arbeitsmodule (18) mit jeweils wenigstens einem Arbeitskanal (20) umfasst, der an einer Koppelfläche (24) in einer Arbeitsöffnung (28) ausmündet und der von einem Fluid durchströmbar ist, wobei die Koppelflächen (22, 24) in der Koppelstellung derart angeordnet sind, dass sich die Anschlussöffnung (26) und die Arbeitsöffnung (28) für eine kommunizierende Verbindung des Anschlusskanals (16) mit dem Arbeitskanal (20) gegenüberliegen, und mit wenigstens einem zwischen dem Anschlussmodul (12) und dem Arbeitsmodul (18) angeordneten Dichtelement (30), das für eine abdichtende Verbindung des Arbeitskanals (20) mit dem jeweils gegenüberliegenden Anschlusskanal (16) ausgebildet ist und das wenigstens zwei zur abdichtenden Anlage am Arbeitsmodul (18) und am Anschlussmodul (12) ausgebildete Dichtbereiche (36, 38) aufweist, **dadurch gekennzeichnet, dass** das Dichtelement (30) einen längs einer Mittelachse (32) hülsenförmig erstreckten Grundkörper (34) umfasst, an dessen einer Stirnseite ein axial erstreckter, umlaufender Stirndichtabschnitt (36) und an dessen Außenumfang ein radial erstreckter, axial beabstandet vom Stirndichtabschnitt (36) angeordneter, umlaufender Umfangsdichtabschnitt (38) ausgebildet ist, und dass das Dichtelement (30) in der Koppelstellung mit dem Stirndichtabschnitt (36) am Anschlussmodul (12) oder am Arbeitsmodul (18) und mit dem Umfangsdichtabschnitt (38) an einem Wandbereich (50) des am jeweils anderen Modul (12, 18) ausgebildeten Arbeitskanals (20) oder Anschlusskanals (16) anliegt, wobei das Dichtelement (30) längs der Mittelachse (32) schiebebeweglich und mit dem Umfangsdichtabschnitt abdichtend im Anschlusskanal (16) oder im Arbeitskanal (20) aufgenommen ist.

2. Fluidtechnische Anordnung nach Anspruch 1, **dadurch gekennzeichnet, dass** der Stirndichtabschnitt (36) und der Umfangsdichtabschnitt (38) an entgegengesetzten Endbereichen des Dichtelements (30) ausgebildet sind.

3. Fluidtechnische Anordnung nach Anspruch 1 oder 2, **dadurch gekennzeichnet, dass** der Stirndichtabschnitt (36) als schräg zur Mittelachse (32) ausgerichtete Stirndichtlippe ausgebildet ist.

4. Fluidtechnische Anordnung nach Anspruch 3, **dadurch gekennzeichnet, dass** die Stirndichtlippe in einer vom Grundkörper (34) wegweisenden Axialrichtung verjüngt ausgebildet ist.

5. Fluidtechnische Anordnung nach einem der vorhergehenden Ansprüche, **dadurch gekennzeichnet, dass** der Umfangsdichtabschnitt (38) als schräg zur Mittelachse (32) ausgerichtete Umfangsdichtlippe ausgebildet ist.

6. Fluidtechnische Anordnung nach Anspruch 5, **dadurch gekennzeichnet, dass** sich die Umfangsdichtlippe (38) in einer vom Grundkörper (34) wegweisenden Axialrichtung radial aufweitet.

7. Fluidtechnische Anordnung nach einem der vorhergehenden Ansprüche, **dadurch gekennzeichnet, dass** der Anschlusskanal (16) und der Arbeitskanal (20) im Bereich der jeweiligen Ausmündung an der Koppelfläche (22, 24) unterschiedliche große freie Querschnitte aufweisen und der größere freie Querschnitt (50) zur Aufnahme des mit dem Umfangsdichtabschnitt (38) versehenen Endbereichs des Dichtelements (30) bestimmt ist.

8. Fluidtechnische Anordnung nach einem der vorhergehenden Ansprüche, **dadurch gekennzeichnet, dass** der Grundkörper (34) hohlzylindrisch und der Stirndichtabschnitt (36) und die Umfangsdichtlippe (38) jeweils ringförmig ausgebildet sind.

9. Fluidtechnische Anordnung nach einem der vorhergehenden Ansprüche, **dadurch gekennzeichnet, dass** ein größter Durchmesser einer Berührlinie des Umfangsdichtabschnitts (38) mit dem Anschlusskanal (16) oder dem Arbeitskanal (20) größer als ein größter Durchmesser einer Berührlinie des Stirndichtabschnitts (36) bei Anlage an dem Arbeitsmodul (18) oder dem Anschlussmodul (12) ist.

10. Fluidtechnische Anordnung nach einem der vorhergehenden Ansprüche, **dadurch gekennzeichnet, dass** das Dichtelement (30) in axialer Richtung aufeinanderfolgende Bereiche (40, 42) mit unterschiedlichen Wandstärken aufweist, wobei ein Bereich (42) mit einer geringeren Wandstärke benachbart zum Umfangsdichtabschnitt (38) und ein Bereich (40) mit einer größeren Wandstärke benachbart zum Stirndichtabschnitt (36) angeordnet sind.

11. Fluidtechnische Anordnung nach einem der vorhergehenden Ansprüche, **dadurch gekennzeichnet, dass** das Dichtelement (30) am Außenumfang wenigstens eine benachbart zum Umfangsdichtabschnitt (38) angeordnete Umfangseinschnürung (62) aufweist.

12. Fluidtechnische Anordnung nach einem der vorhergehenden Ansprüche, **dadurch gekennzeichnet, dass** der Stirndichtabschnitt (36) in axialer Richtung eine größere Flexibilität aufweist als der Umfangsdichtabschnitt (39).

13. Fluidtechnische Anordnung nach einem der vorhergehenden Ansprüche, **dadurch gekennzeichnet, dass** der Grundkörper (34) einstückig aus einem gummielastischen Material, insbesondere im Kunststoffspritzgussverfahren, hergestellt ist.

14. Dichtelement für eine fluidtechnische Anordnung nach einem der vorhergehenden Ansprüche, **dadurch gekennzeichnet, dass** das Dichtelement (30) einen längs einer Mittelachse (32) hülsenförmig erstreckten Grundkörper (34) umfasst, an dessen Stirnseite ein axial erstreckter, umlaufender Stirndichtabschnitt (36) und an dessen Außenumfang ein radial erstreckter, axial beabstandet vom Stirndichtabschnitt (36) angeordneter, umlaufender Umfangsdichtabschnitt (38) ausgebildet ist, wobei der Stirndichtabschnitt (36) und der Umfangsdichtabschnitt (38) an entgegengesetzten Endbereichen des Grundkörpers (34) angeordnet sind und der Stirndichtabschnitt (36) als schräg zur Mittelachse (32) ausgerichtete Stirndichtlippe ausgebildet ist sowie der Umfangsdichtabschnitt (38) als schräg zur Mittelachse (32) ausgerichtete Umfangsdichtlippe ausgebildet ist.

## Claims

1. Fluidic arrangement with a connection module (12) including at least one connection passage (16) which opens out at a coupling face (22) into a connection port (26) and is designed for the supply or removal of fluid, and with an operating unit (14), attached releasably to the connection module (12) in a coupled position and comprising several operating modules (18), lined up side by side and releasably connected to one another by connection devices and each having at least one operating passage (20) which opens out into an operating port (28) at a coupling face (24) and through which a fluid may flow, wherein the coupling faces (22, 24) are so arranged in the coupled position that the connection port (26) and the operating port (28) lie opposite for communicating connection of the connection passage (16) with the operating passage (20), and with at least one sealing element (30) provided between the connection module (12) and the operating module (18) and designed for a sealing connection of the operating passage (20) with the respectively opposite connection passage (16), and which has at least two sealing areas (36, 38) designed for sealing contact at the operating module (18) and the connection module (12), **characterised in that** the sealing element (30) comprises a base body (34) extending sleeve-like along a centre axis (32), with a continuous end-face sealing section (36) extending axially at one of its end faces, and on its outer periphery a radially extending continuous peripheral sealing section (38) with axial clearance from the end-face sealing section (36), and that the sealing element (30) in the coupled position fits up with the end-face sealing section (36) against the connection module (12) or the operating module (18), and with the peripheral sealing section (38) abuts a wall section (50) of the operating passage (20) or connection passage (16) formed on the respective other module (12, 18), wherein the sealing element (30) is held along the centre axis (32) with sliding movement facility and with the peripheral sealing section sealing in the connection passage (16) or in the operating passage (20).

2. Fluidic arrangement according to claim 1, **characterised in that** the end-face sealing section (36) and the peripheral sealing section (38) are formed at opposite end sections of the sealing element (30).

3. Fluidic arrangement according to claim 1 or 2, **characterised in that** the end-face sealing section (36) is in the form of an end-face sealing lip aligned at an angle to the centre axis (32).

4. Fluidic arrangement according to claim 3, **characterised in that** the end-face sealing lip is tapered in an axial direction facing away from the base body (34).

5. Fluidic arrangement according to any of the preceding claims, **characterised in that** the peripheral sealing section (38) is in the form of a peripheral sealing lip aligned at an angle to the centre axis (32).

6. Fluidic arrangement according to claim 5, **characterised in that** the peripheral sealing lip (38) expands radially in an axial direction facing away from the base body (34).

7. Fluidic arrangement according to any of the preceding claims, **characterised in that** the connection passage (16) and the operating passage (20), in the area of their respective opening out at the coupling face (22, 24), have free cross-sections of different size, and the greater free cross-section (50) is determined to accommodate the end section of the sealing element (30) provided with the peripheral sealing section (38).

8. Fluidic arrangement according to any of the preceding claims, **characterised in that** the base body (34) is hollow-cylindrical and the end-face sealing section (36) and the peripheral sealing lip (38) are both annular in form.

9. Fluidic arrangement according to any of the preceding claims, **characterised in that** a maximum diameter of a contact line of the peripheral sealing section (38) with the connection passage (16) or the operating passage (20) is greater than a maximum diameter of a contact line of the end-face sealing section (36) on contact with the operating module (18) or the connection module (12).

10. Fluidic arrangement according to any of the preceding claims, **characterised in that** the sealing element (30) in the axial direction has consecutive areas (40, 42) with different wall thickness, with one area (42) with a lesser wall thickness located adjacent to the peripheral sealing section (38), and an area (40) with greater wall thickness being located adjacent to the end-face sealing section (36).

11. Fluidic arrangement according to any of the preceding claims, **characterised in that** the sealing element (30) has on the outer periphery at least one peripheral constriction (62) adjacent to the peripheral sealing section (38).

12. Fluidic arrangement according to any of the preceding claims, **characterised in that** the end-face sealing section (36) has greater flexibility in the axial direction than the peripheral sealing section (39).

13. Fluidic arrangement according to any of the preceding claims, **characterised in that** the base body (34) is made in one piece of a rubberelastic material, in particular by a plastic injection moulding process.

14. Sealing element for a fluidic arrangement according to any of the preceding claims, **characterised in that** comprises a base body (34) extending sleeve-like along a centre axis (32), with a continuous end-face sealing section (36) extending axially at one of its end faces, and on its outer periphery a radially extending continuous peripheral sealing section (38) with axial clearance from the end-face sealing section (36), wherein the end-face sealing section (36) and the peripheral sealing section (38) are formed at opposite end sections of the base body (34) and the end-face sealing section (36) is in the form of an end-face sealing lip aligned at an angle to the centre axis (32), and the peripheral sealing section (38) is in the form of a peripheral sealing lip aligned at an angle to the centre axis (32).

## Revendications

1. Système fluidique comportant un module de raccordement (12), qui comporte au moins un canal de raccordement (16), lequel débouche dans une ouverture de raccordement (26) au niveau d'une face de couplage (22) et qui est réalisé pour une amenée ou une évacuation de fluide, et comportant une unité de travail (14) placée dans une position de couplage de manière amovible au niveau du module de raccordement (12), laquelle unité de travail comporte plusieurs modules de travail (18) équipés respectivement d'au moins un canal de travail (20), alignés en une rangée et reliés entre eux de manière amovible par des dispositifs d'assemblage, le canal de travail débouchant dans une ouverture de travail (28) au niveau d'une face de couplage (24) et pouvant être traversé par un fluide, sachant que les faces de couplage (22, 24) sont disposées dans la position de couplage de telle manière que l'ouverture de raccordement (26) et l'ouverture de travail (28) se font face pour relier de manière communicante le canal de raccordement (16) et le canal de travail (20), et comportant au moins un élément d'étanchéité (30) disposé entre le module de raccordement (12) et le module de travail (18), lequel élément d'étanchéité est réalisé pour relier de manière étanche le canal de travail (20) et le canal de raccordement (16) respectivement opposé et qui présente au moins deux zones d'étanchéité (36, 38) réalisées pour l'installation étanchéifiante au niveau du module de travail (18) et au niveau du module de raccordement (12), **caractérisé en ce que** l'élément d'étanchéité (30) comporte un corps de base (34) s'étendant sous forme de manchon le long d'un axe médian (32), au niveau d'un côté frontal duquel corps de base est réalisée une section d'étanchéité frontale (36) rotative s'étendant axialement et au niveau de la périphérie extérieure duquel corps de base est réalisée une section d'étanchéité périphérique rotative (38) s'étendant radialement et étant disposée de manière axialement espacée de la section d'étanchéité frontale (36), et **en ce que** l'élément d'étanchéité (30) repose dans la position de couplage avec la section d'étanchéité frontale (36) au niveau du module de raccordement (12) ou au niveau du module de travail (18) et avec la section d'étanchéité périphérique (38) au niveau d'une zone de paroi (50) du canal de travail (20) réalisé au niveau d'un autre module respectivement (12, 18) ou du canal de raccordement (16), sachant que l'élément d'étanchéité (30) est reçu le long de l'axe médian (32) de manière mobile par coulissement et avec la section d'étanchéité périphérique de manière étanche dans le canal de raccordement (16) ou dans le canal de travail (20).

2. Système fluidique selon la revendication 1, **caractérisé en ce que** la section d'étanchéité frontale (36) et la section d'étanchéité périphérique (38) sont réalisées au niveau des zones d'extrémité opposées de l'élément d'étanchéité (30).

3. Système fluidique selon la revendication 1 ou 2, **caractérisé en ce que** la section d'étanchéité frontale (36) est réalisée comme une lèvre d'étanchéité frontale orientée de manière oblique par rapport à l'axe médian (32).

4. Système fluidique selon la revendication 3, **caractérisé en ce que** la lèvre d'étanchéité frontale est réalisée de manière rétrécie dans une direction axiale opposée au corps de base (34).

5. Système fluidique selon l'une quelconque des revendications précédentes, **caractérisé en ce que** la section d'étanchéité périphérique (38) est réalisée comme une lèvre d'étanchéité périphérique orientée de manière oblique par rapport à l'axe médian (32).

6. Système fluidique selon la revendication 5, **caractérisé en ce que** la lèvre d'étanchéité périphérique (38) s'élargit radialement dans une direction axiale opposée au corps de base (34).

7. Système fluidique selon l'une quelconque des revendications précédentes, **caractérisé en ce que** le canal de raccordement (16) et le canal de travail (20) présentent dans la zone de sortie respective au niveau de la face de couplage (22, 24) différentes grandes sections transversales libres, et **en ce que** la plus grande section transversale (50) libre est destinée à recevoir la zone d'extrémité de l'élément d'étanchéité (30) pourvue de la section d'étanchéité périphérique (38).

8. Système fluidique selon l'une quelconque des revendications précédentes, **caractérisé en ce que** le corps de base (34) est réalisé de manière creuse et cylindrique, et **en ce que** la section d'étanchéité frontale (36) et la lèvre d'étanchéité périphérique (38) sont respectivement réalisées de manière à présenter une forme annulaire.

9. Système fluidique selon l'une quelconque des revendications précédentes, **caractérisé en ce qu'**un diamètre le plus grand d'une ligne de contact de la section d'étanchéité périphérique (38) avec le canal de raccordement (16) ou avec le canal de travail (20) est plus grand qu'un diamètre le plus grand d'une ligne de contact de la section d'étanchéité frontale (36) en cas d'appui au niveau du module de travail (18) ou du module de raccordement (12).

10. Système fluidique selon l'une quelconque des revendications précédentes, **caractérisé en ce que** l'élément d'étanchéité (30) présente dans une direction axiale des zones (40, 42) successives ayant diverses épaisseurs de paroi, sachant qu'une zone (42) avec une faible épaisseur de paroi est disposée de manière adjacente par rapport à la section d'étanchéité périphérique (38) et qu'une zone (40) avec une épaisseur de paroi plus grande est disposée de manière adjacente par rapport à la section d'étanchéité frontale (36).

11. Système fluidique selon l'une quelconque des revendications précédentes, **caractérisé en ce que** l'élément d'étanchéité (30) présente au niveau de la périphérie extérieure au moins un rétrécissement périphérique (62) disposé de manière adjacente par rapport à la section d'étanchéité périphérique (38).

12. Système fluidique selon l'une quelconque des revendications précédentes, **caractérisé** e ce que la section d'étanchéité frontale (36) présente dans une direction axiale une flexibilité plus importante que la section d'étanchéité périphérique (39).

13. Système fluidique selon l'une quelconque des revendications précédentes, **caractérisé en ce que** le corps de base (34) est fabriqué d'un seul tenant à partir d'un matériau élastique, en particulier dans un procédé de moulage par injection de matière plastique.

14. Elément d'étanchéité pour un système fluidique selon l'une quelconque des revendications précédentes, **caractérisé en ce que** l'élément d'étanchéité (30) comporte un corps de base (34) s'étendant le long d'un axe médian (32) de manière à présenter une forme de manchon, au niveau du côté frontal duquel corps de base est réalisée une section d'étanchéité frontale (36) rotative s'étendant axialement et au niveau de la périphérie extérieure duquel corps de base est réalisée une section d'étanchéité périphérique (38) rotative, s'étendant radialement et disposée de manière axialement espacée de la section d'étanchéité frontale (36), sachant que la section d'étanchéité frontale (36) et la section d'étanchéité périphérique (38) sont disposées au niveau des zones d'extrémité opposées du corps de base (34) et que la section d'étanchéité frontale (36) est réalisée comme une lèvre d'étanchéité frontale orientée de manière oblique par rapport à l'axe médian (32) et que la section d'étanchéité périphérique (38) est réalisée comme une lèvre d'étanchéité périphérique orientée de manière oblique par rapport à l'axe médian (32).
